# EUROPÄISCHE PATENTSCHRIFT

(11) **EP 0 894 178 B1**
(45) Veröffentlichungstag und Bekanntmachung des Hinweises auf die Patenterteilung: **11.07.2001**
(21) Anmeldenummer: 97916336.7
(22) Anmeldetag: 07.03.1997
(51) Int. Cl.: E05F 15/16

(54) **VORRICHTUNG ZUM BETREIBEN EINES VERSTELLANTRIEBS**
DEVICE FOR OPERATING AN ADJUSTING DRIVE
DISPOSITIF POUR ACTIONNER UN ENTRAINEMENT DE REGLAGE

(30) Priorität: 17.04.1996 DE 19615125
(43) Veröffentlichungstag der Anmeldung: 03.02.1999
(73) Patentinhaber: ROBERT BOSCH GMBH, 70442 Stuttgart (DE)
(72) Erfinder: VÖHRINGER, Klaus, D-76316 Malsch (DE); HADERER, Günter, D-77815 Bühl (DE)
(86) Internationale Anmeldenummer: DE9700452
(87) Internationale Veröffentlichungsnummer: WO9739216

(56) Entgegenhaltungen:
- GB-A- 2 189 906
- US-A- 5 278 480

## Beschreibung

### Stand der Technik

Die Erfindung geht aus von einer Vorrichtung zum Betreiben eines Verstellantriebs nach der Gattung des unabhängigen Hauptanspruchs. Es ist Stand der Technik, die Verstellantriebe in Abhängigkeit der vorher bekannten Belastung zu parametrieren (Zum Beispiel aus GB-A-2 189 906). Die Parameter des Verstellantriebs können bestimmte Positionen umfassen, die der Verstellantrieb anfahren soll. Unterschiedliche Parametersätze dienen ferner dazu, die jeweiligen Überwachungskriterien an die unterschiedlichen Belastungssituationen anzugleichen. In der Regel erfolgt die Parametrierung des Verstellantriebs - je nach vorgesehener Anwendung - vor der Montage.

### Vorteile der Erfindung

Die erfindungsgemäße Vorrichtung zum Betreiben eines Verstellantriebs hat den Vorteil, daß die Parametrierung des Verstellantriebs nach der Montage geschehen kann. Ein Referenzlauf ermittelt automatisch, für welche Anwendungsart der jeweilige Verstellantrieb vorgesehen ist. Daraufhin wählt die Vorrichtung selbständig den geeigneten Parametersatz aus. Durch die erfindungsgemäße Vorrichtung wird eine Variantenreduktion unterstützt, weil nun ein und dieselbe Vorrichtung in unterschiedlichen Anwendungen montiert werden kann. Dabei decken die verschiedenen Parametersätze die unterschiedlichen Belastungsfälle ab.

Die erfindungsgemäße Vorrichtung zum Betreiben eines Verstellantriebs findet bevorzugte Verwendung bei Verstellantrieben für Fensterheber und Schiebedächer.

Weitere vorteilhafte Ausgestaltungen ergeben sich aus der Beschreibung.

### Zeichnung

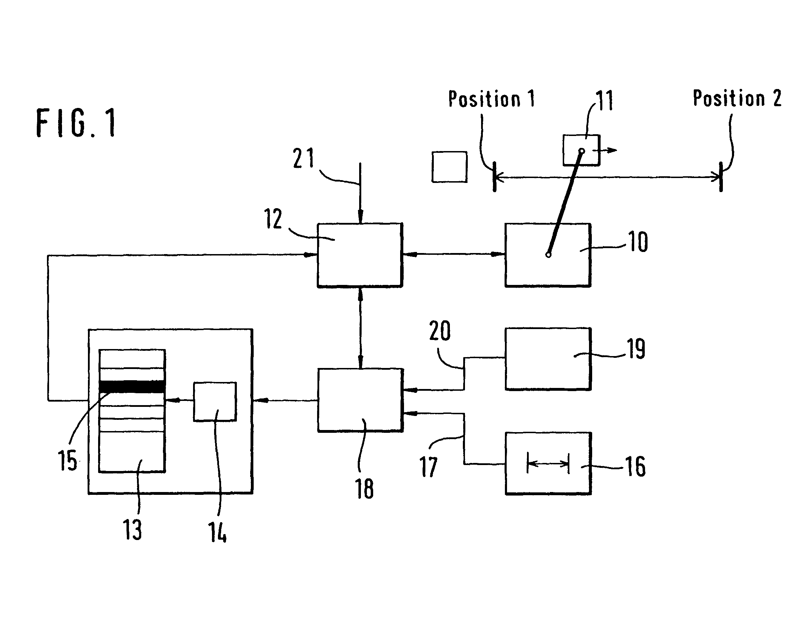

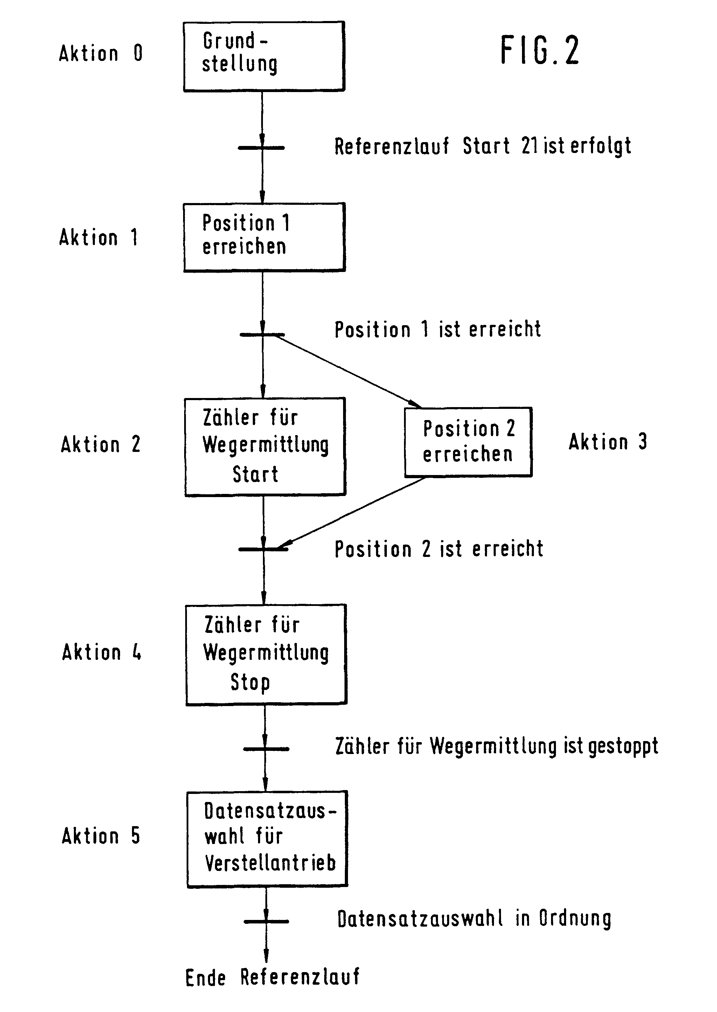

Ein Ausführungsbeispiel einer erfindungsgemäßen Vorrichtung ist in Figur 1 dargestellt und Figur 2 zeigt ein Beispiel eines Referenzlaufs als Ablaufdiagramm.

### Beschreibung

Ein Verstellantrieb 10 bewegt ein Teil 11, das sich zumindest zwischen einer Position 1 und einer Position 2 verschieben läßt. Ein Weggeber 19 erzeugt Wegsignale 20, die, ebenso wie die von einem Positionsdetektor 16 generierten Positionssignale 17, an eine Wegermittlung 18 abgegeben werden. Die Wegermittlung 18 tauscht Signale mit einer Steueranordnung 12 aus. Die Wegermittlung 18 stellt einer Datensatzauswahl 14 Signale zur Verfügung, mit deren Hilfe die Datensatzauswahl 14 aus verschiedenen,in einem Speicher 13 hinterlegten Datensätzen einen Datensatz 15 auswählt und ihn an die Steueranordnung 12 abgibt. Die Steueranordnung 12 startet nach dem Erhalt des Signals "Referenzlauf Start" 21 einen Referenzlauf.

Eine Ausführungsmöglichkeit des Referenzlaufs beschreibt Figur 2. Ausgehend von Aktion Null, der Grundstellung, wird nach Betätigen des Signals "Referenzlauf Start" 21 die Aktion 1 angestoßen. Hierbei wird die Position 1 erreicht. Ist Position 1 erreicht, wird simultan der Zähler für die Wegermittlung 18 (Aktion 2) gestartet und der Befehl gegeben, Position 2 zu erreichen (Aktion 3). Ist Position 2 erreicht, wird in der Aktion 4 der Zähler für die Wegermittlung 18 gestoppt. Danach erfolgt in der Aktion 5 eine Datensatzauswahl 14 für den Verstellantrieb 10. Nach der Datensatzauswahl 14 ist das Ende des Referenzlaufs erreicht.

Die in den Figuren 1 und 2 gezeigten Anordnungen arbeiten folgendermaßen:

Die Vorrichtung befindet sich in der Grundstellung (Aktion Null). Hierbei ist das Teil 11 beliebig positioniert. In dem Speicher 13 befinden sich unterschiedliche Datensätze, von denen bislang noch keiner der Steueranordnung 12 als relevant mitgeteilt wurde. Der Referenzlauf wird über das Signal "Referenzlauf Start" 21 angestoßen. Das Signal könnte beispielsweise während des ersten Betätigens des Verstellantriebs 10 erzeugt werden.

Während der Aktion 1 muß die Steueranordnung 12 dem Verstellantrieb 10 Steuersignale senden, um die Position 1 zu erreichen. Es ist hierbei denkbar, daß der Verstellantrieb 10 mit einer vorgegebenen Drehzahl das Teil 11 in eine vorgegebene Richtung bewegt. Zum besseren Verständnis soll der Verstellantrieb 10 das Teil 11 zuerst nach rechts gemäß Figur 1 bewegen. Befindet sich die Ausgangslage des Teils 11 rechts von der Position 1, wird das Teil 11 zuerst die Position 2 erreichen. Der Positionsdetektor 16 gibt daraufhin Positionssignale 17 an die Wegermittlung 18 und an die Steueranordnung 12 ab, die der Steueranordnung 12 mitteilen, daß Position 2 erreicht ist.

Positionssignale 17 können beispielsweise über Schalter oder Mikroschalter erzeugt werden, die ihr Ausgangssignal ändern, sobald Teil 11 die mit dem Schalter versehene Position erreicht. Auch ist es denkbar, wenn im Verstellantrieb 10 ein Elektromotor vorhanden ist, den Verlauf des Ankerstroms oder die zeitliche Änderung des Ankerstroms zur Positionsauswertung heranzuziehen. Ist nämlich beispielsweise eine Position als mechanischer Endanschlag ausgeführt, so steigt der Ankerstrom aufgrund der Klemmsituation an. Sind hierbei bestimmte Grenzen überschritten, gibt der Positionsdetektor 16 Positionssignale 17 ab, die anzeigen, daß der mechanische Endanschlag erreicht ist. Der Endanschlag läßt sich auch über eine Drehzahlauswertung detektieren, wenn die Drehzahl des Verstellantriebs 10 für ein bestimmtes Zeitintervall den Wert Null angenommen hat. Ebenso ist eine Kombination der beschriebenen Möglichkeiten zur Positionsbestimmung, beispielsweise eine Auswertung der Schaltersignale gemeinsam mit der Erkennung mechanischer Endanschläge, denkbar.

Das Teil 11 ist in der Aktion 1 bei der Position 2 angelangt. Daraufhin veranlaßt die Steueranordnung 12 eine Drehrichtungsumkehr des Verstellantriebs 10. Das Teil 11 bewegt sich nun nach links und erreicht schließlich die Position 1, was die Positionssignale 17 der Wegermittlung 18 und der Steueranordnung 12 mitteilen.

Befindet sich das Teil 11 in der Ausgangslage links von Position 1, wird bei der vorgegebenen Rechtsbewegung die Position 1 ohne Drehrichtungsumkehr erreicht. Damit ist die für die Aktionen 2 und 3 notwendige Bedingung erfüllt.

Im Rahmen der Aktion 2 wird der Zähler für die Wegermittlung 18 gestartet. Der Weggeber 19 gibt beispielsweise inkrementale Wegsignale 20 an den Zähler der Wegermittlung 18 ab. Die inkrementalen Wegsignale 20 können beispielsweise von einem Hall-Sensor erzeugt werden. Der Zähler zählt die Impulse des Hall-Sensors, bis er gestoppt wird. Außerdem ist es möglich, die inkrementalen Wegsignale 20 aus der Welligkeit des Ankerstroms des Elektromotors zu bilden. Die Anzahl der Extrema des welligen Ankerstroms ist hierbei ein Maß für den zurückgelegten Weg.

Parallel zu Aktion 2 läuft Aktion 3 ab. Die Steueranordnung 12 gemäß Figur 1 gibt dem Verstellantrieb 10 den Befehl, das Teil 11 nach rechts in einer bestimmten Geschwindigkeit zu verschieben.

Ist die Position 2 erreicht, wird der Zähler für die Wegermittlung gestoppt. Ist dies erfolgt, so schließt sich in der Aktion 5 die Datensatzauswahl 14 an. Der Zählerstand ist ein Maß für die Strecke, die zwischen Position 1 und Position 2 liegt. Mit Hilfe der ermittelten Strecke kann beispielsweise ein bestimmter Schiebedachtyp erkannt werden. Für jeden Schiebedachtyp sind die Abstände zwischen Position 1 und Position 2 bekannt, ebenso wie die Belastungen, die sich in Abhängigkeit vom Schiebedachtyp für den Verstellantrieb 10 ergeben. Die schiebedachabhängigen Parametersätze sind in Abhängigkeit von der Strecke im Speicher 13 hinterlegt. Die Datensatzauswahl 14 beaufschlagt die ermittelte Strecke mit einem erweiternden Toleranzband. Dann sucht sich die Datensatzauswahl 14 den Datensatz 15, dessen Strecke innerhalb des ermittelten Bereichs liegt. Dieser Datensatz 15 liefert der Steueranordnung 12 beispielsweise Informationen über bestimmte Positionen oder belastungsabhängige Grenzwerte. Der Referenzlauf ist damit beendet und der Verstellantrieb 10 mit dem Datensatz 15 parametriert.

## Patentansprüche

1. Vorrichtung zum Betreiben eines Verstellantriebs (10), mit einem verschiebbaren Teil (11), mit einer Steueranordnung (12), die Schaltsignale an den das Teil verschiebenden Verstellantrieb (10) in Abhängigkeit von wenigstens einem in einem Speicher (13) hinterlegten Datensatz abgibt, und mit einem Positionsdetektor (16), dadurch gekennzeichnet, daß ein Referenzlauf des Verstellantriebs (10) mit einer Wegermittlung (18) vorgesehen ist, die aus Wegsignalen (20) eines Weggebers (19) und aus Positionssignalen (17) des Positionsdetektors (16) die von dem Teil (11) zwischen wenigstens zwei vorgegebenen Positionen liegende Strecke ermittelt, und daß eine Datensatzauswahl (14) in Abhängigkeit von der ermittelten Strecke einen Datensatz (15) aus mehreren in einem Speicher (13) hinterlegten Datensätzen auswählt.

2. Vorrichtung nach Anspruch 1, dadurch gekennnzeichnet, daß wenigstens eine vorgegebene Position ein mechanischer Anschlag ist und diese Position über eine Auswertung des Ankerstroms und/oder der Drehzahl eines in einem Verstellantrieb (10) angeordneten Elektromotors vom Positionsdetektor (16) erkannt ist.

3. Vorrichtung nach Anspruch 1, dadurch gekennzeichnet, daß wenigstens eine vorgegebene Position über einen Schalter vom Positionsdetektor (16) erkannt ist.

4. Vorrichtung nach Anspruch 1, dadurch gekennzeichnet, daß der Weggeber (19) inkrementale Wegsignale (20) abgibt.

5. Vorrichtung nach Anspruch 4, dadurch gekennzeichnet, daß die inkrementalen Wegsignale (20) aus Signalen eines Hall-Sensors gebildet werden.

6. Vorrichtung nach Anspruch 4, dadurch gekennzeichnet, daß die inkrementalen Wegsignale (20) aus der Welligkeit des Ankerstroms des Elektromotors gebildet werden.

7. Vorrichtung nach Anspruch 1, dadurch gekennzeichnet, daß zur Wegermittlung (18) ein Zähler verwendet ist.

8. Vorrichtung nach einem der Ansprüche 1 bis 7, gekennzeichnet durch Verwendung bei einem Schiebedach.

9. Vorrichtung nach einem der Ansprüche 1 bis 7, gekennzeichnet durch Verwendung bei einem Fensterheber.

## Claims

1. Apparatus for operating an adjusting drive (10), having a displaceable part (11), having a control arrangement (12), which outputs switching signals to the adjusting drive (10), which displaces the part, in a manner dependent on at least one data record stored in a memory (13), and having a position detector (16), characterized in that provision is made of a reference run of the adjusting drive (10) with a displacement determination (18), which determines, from displacement signals (20) of a displacement sensor (19) and from position signals (17) of the position detector (16), the distance covered by the part (11) between at least two predetermined positions, and in that a data record selection (14) selects a data record (15) from a plurality of data records stored in a memory (13), in a manner dependent on the distance determined.

2. Apparatus according to Claim 1, characterized in that at least one predetermined position is a mechanical stop and this position is identified by the position detector (16) by means of an evaluation of the armature current and/or of the rotational speed of an electric motor arranged in an adjusting drive (10).

3. Apparatus according to Claim 1, characterized in that at least one predetermined position is identified by the position detector (16) by means of a switch.

4. Apparatus according to Claim 1, characterized in that the displacement sensor (19) outputs incremental displacement signals (20).

5. Apparatus according to Claim 4, characterized in that the incremental displacement signals (20) are formed from signals of a Hall sensor.

6. Apparatus according to Claim 4, characterized in that the incremental displacement signals (20) are formed from the ripple of the armature current of the electric motor.

7. Apparatus according to Claim 1, characterized in that a counter is used for the displacement determination (18).

8. Apparatus according to one of Claims 1 to 7, characterized by use for a sliding sunroof.

9. Apparatus according to one of Claims 1 to 7, characterized by use for a window winding mechanism.

## Revendications

1. Dispositif servant à faire fonctionner un entraînement de réglage (10), comprenant une pièce (11), qui peut coulisser, un dispositif de commande (12), qui délivre des signaux de commande à l'entraînement de réglage (10) qui fait coulisser la pièce en fonction d'au moins un ensemble de données déposé dans une mémoire (13), et un détecteur de position (16),
caractérisé en ce qu'
• il est prévu un parcours de référence de l'entraînement de réglage (10) avec un appareil de détermination du trajet (18), qui détermine à partir des signaux de trajet (20) d'un détecteur de trajet (19) et à partir des signaux de position (17) du détecteur de position (16) les distances qui se trouvent entre deux positions pré-définies, et
• un appareil de sélection d'un ensemble de données (14) sélectionne en fonction de la distance déterminée un ensemble de données (15) à partir de plusieurs ensembles de données déposés dans la mémoire (13).

2. Dispositif selon la revendication 1,
caractérisé en ce que
• au moins une position prédéfinie est constituée par une butée mécanique, et
• cette position est identifiée au moyen d'un appareil d'exploitation du courant d'induit et/ou de la vitesse de rotation d'un moteur électrique disposé dans un entraînement de réglage (10) par le détecteur de position (16).

3. Dispositif selon la revendication 1,
caractérisé en ce que
au moins une position prédéfinie est identifiée au moyen d'un commutateur par le détecteur de position (16).

4. Dispositif selon la revendication 1,
caractérisé en ce que
le capteur de trajet (19) délivre en particulier des signaux d'incrémentation de trajet (20).

5. Dispositif selon la revendication 4,
caractérisé en ce que
les signaux d'incrémentation de trajet (20) sont constitués à partir de signaux d'un détecteur Hall.

6. Dispositif selon la revendication 4,
caractérisé en ce que
les signaux d'incrémentation de trajet (20) sont constitués à partir de l'ondulation du courant d'induit du moteur électrique.

7. Dispositif selon la revendication 1,
caractérisé en ce qu'
on utilise un compteur pour l'appareil de détermination du trajet (18).

8. Dispositif selon l'une quelconque des revendications 1 à 7,
caractérisé par
l'utilisation dans le cas d'un toit ouvrant.

9. Dispositif selon l'une des revendications 1 à 7,
caractérisé par
l'utilisation dans le cas d'un lève-vitre.
